# EUROPEAN PATENT SPECIFICATION

(11) **EP 1 186 192 B1**
(45) Date of publication and mention of the grant of the patent: **30.05.2007**
(21) Application number: 00935778.1
(22) Date of filing: 18.05.2000
(51) Int. Cl.: H04Q 7/38

(54) **PROCEDURE AND DEVICE FOR ALLOCATION OF RADIO RESOURCES**
VERFAHREN UND GERÄT ZUR ZUWEISUNG VON FUNKRESSOURCEN
PROCEDURE ET DISPOSITIF D'ATTRIBUTION DE RESSOURCES RADIO

(30) Priority: 28.05.1999 SE 9901952
(43) Date of publication of application: 13.03.2002
(73) Proprietor: TELIA AB, 123 86 Farsta (SE)
(72) Inventor: AYOUB, Souhad, S-141 55 Huddinge (SE)
(74) Representative: Hopfgarten, Nils
(86) International application number: PCT/SE2000/000998
(87) International publication number: WO 2000/074428

(56) References cited:
- EP-A1- 0 427 687
- EP-A1- 0 841 763
- WO-A1-95/02307
- WO-A1-97/01254
- WO-A1-98/57517
- US-A- 5 504 939

## Description

### Field of the invention

The present invention relates to a procedure and a device for allocation of radio resources in form of time slots in a cellular radio system, which allocation is performed to, in the cells of the system, meet the request by mobile stations for bandwidth in form of one or more consecutive time slots.

### The background of the invention

Today there is a number of cellular radio systems that offer services to their users. One of the more well-known systems is GSM (Global System for Mobile communication), which is a land-based mobile telephone system that offers its users both voice- and data services.

In the GSM-system of today there are offered, in addition to the voice/speech service, a number of different data services providing a data speed of at most 9,6 kbit/s per user. Today the voice service is the dominating GSM-service, but in the future, data services will increase as new high speed data services are introduced, of which HSCSD (High Speed Circuit Switched Data) is a typical example. HSCSD is intended to use the same radio network infrastructure as the GSM-system of today, inclusive the voice- and data services of today.

The radio interface in GSM is digitized, which results in that a plurality of users can share one and the same radio frequency. In the GSM-system a hybride-solution between TDMA- and FDMA- (Time/Frequency Division Multiple Access) technology is used, which means that the using time of a radio frequency is divided into recurrent frames, where each frame is divided into small periods of time, so called time slots. Each time slot recurs in each frame and constitutes a channel that a user can utilize.

At planning of cells, the coverage area of the system is divided into a number of cells where each cell has a base station that serves all mobile stations that are in the coverage area of the cell. Each cell is allocated a number of TRXes, where a TRX is constituted by a pair of frequencies; one frequency for a downlink and one frequency for an uplink. In the present patent application such a pair of frequencies is called frequency pair. In GSM there are today a number of standardized and limited radio frequencies. Each GSM-operator has been allocated a number of radio frequencies by the local authorities. Each frequency is divided into recurrent frames of 8 time slots. This results in that the number of time slots will be limited, which forces the operator to reuse his/her frequencies a number of times within the operator's coverage area. Some time slots are allocated for signal traffic, whereas the rest are allocated for ordinary traffic, such as voice traffic and data traffic.

In the future, the GSM-system will, by the introduction of "High Speed Circuit Switched Data" (HSCSD), be able to offer data services with higher data speed than the GSM-system of today offers. At utilization of an HSCSD-service a user is allocated more than one time slot, at which the data speed can be increased by a multiple of 9,6 kbit/s. HSCSD will offer two different types of data services, namely "Fixed Service" and "Flexible Service". At "Fixed Service", the mobile station is allocated a fixed number of time slots that shall be in a fixed way allocated all the time when the service is utilized; at "Flexible Service", on the other hand, the number of allocated time slots can vary during the time of utilization of the service. By the utilization of a plurality of channels, i.e. allocated time slots, an HSCSD-user can increase his/her data speed over the GSM-system from the highest offered data speed of today of 9,6 kbit/s, to up to 4 times 9,6 kbit/s.

To make HSCSD function, also new mobile classes that shall manage to utilize a plurality of time slots at the same time are needed. Among the variety of new mobile classes there will be mobile classes that demand that the system allocates consecutive time slots to make them function. Mobile terminals or mobile stations in such mobile classes will be cheap and easy to implement, which results in that they in all probability will dominate the market.

Consecutive time slots are the time slots that are in numerical order after each other in a frame in one and the same frequency, for instance the time slots 1 and 2, the time slots 2 and 3, the time slots 3 and 4 etc. Suppose that a mobile station in a mobile class that demands consecutive time slots for instance wants to utilize an HSCSD-service that is based on two consecutive time slots in uplink and two consecutive time slots in downlink. Further, suppose that of the 8 time slots that a frame includes, which time slots are numbered in order from 0 to 7, the time slots with number 0, 2, 4, and 6 are occupied. Then the problem will arise that a request from the mobile station about utilization of the HSCSD-service will not be possible to meet because the occupied time slots are blocking an allocation of two consecutive time slots. The system at that either can release a time slot by "de-allocating" any of the time slots 0, 2, 4 or 6 from a mobile station that is already utilizing a service that the system offers, or block the mobile station that has requested the HSCSD-service, at least if this mobile station has requested a "fixed service".

Another solution to this problem is that the system moves, or regroups, one or more of the occupied time slots, or rather of the occupied channels, by means of a so called "intracell handover"-mechanism. If, for instance, the transmission that utilizes time slot number 6 instead is regrouped to utilize time slot number 7, the frame will contain two free, consecutive time slots, namely the time slots with number 5 and 6. After this regrouping, the system can allocate two consecutive time slots to the mobile station which, by its request for an HSCSD-connection, has required such allocation.

Said approach is described in document WO 98/57517 A1.

Intracell handover, or IHO, is a generally known concept in the field of mobile telephone systems and is normally used for quality-handover. IHO is a function that requires a certain signaling capacity between the base station and the mobile station to make it possible for both the mobile station and the base station to synchronize to a new frequency and/or a new time slot within a cell.

A problem that will arise if said regrouping, and by that intracell handover, is made too frequently, with the aim to offer free, consecutive time slots, is that the signal load in the system will increase. One of the aims of the present invention is to solve this problem.

### Summary of the invention

An aim of the present invention is to provide a procedure and a device to offer consecutive time slots to a user in a cellular radio system with minimized signal load in the system.

According to the invention, said aim of a procedure and a device for allocation of time slots in a cellular radio system is achieved according to the enclosed patent claims.

According to a first aspect of the invention, a procedure is provided at allocation of radio resources in form of time slots in a cellular radio system, in which system a cell has at its disposal an amount of frequency pairs, at which each time slot in a frame in a frequency pair is constituted by a time slot in a frame in an uplink and a corresponding time slot in a frame in a downlink, and in which system a first mobile station for communication in a cell requests bandwidth in form of one or more consecutive time slots, at which allocation of said one or more time slots to the mobile station includes the steps:
to select a frequency pair, among said amount of frequency pairs of the cell, based on the number of free, consecutive time slots in respective frequency pair;
to select one or more free, consecutive time slots in the selected frequency pair, based on the location of said one or more free time slots in the frame of time slots of the selected frequency pair; and
to allocate the selected time slot/slots to the mobile station.

According to a second aspect of the invention, a device for allocation of radio resources in form of time slots in a cellular radio system is provided, in which system a cell has at its disposal an amount of frequency pairs, at which each time slot in a frame in a frequency pair is constituted by a time slot in a frame in an uplink, and a corresponding time slot in a frame in a downlink, and in which system a first mobile station for communication in a cell requests bandwidth in form of one or more consecutive time slots, at which the device for allocation of said one or more time slots to the mobile station includes:
first device to select a frequency pair, among said amount of frequency pairs of the cell, based on the number of free, consecutive time slots in respective frequency pair;
second device to select one or more free, consecutive time slots in the selected frequency pair, based on the location of said one or more free time slots in the frame of time slots of the selected frequency pair; and
third device to allocate the selected time slot/slots to the mobile station.

The invention consequently solves the problem by, at allocation of time slots, first taking into consideration the number of free, consecutive time slots in the different frequency pairs at selection of frequency pair, and then select one or more free time slots for allocation with regard to the location of the free time slots in the selected frequency pair. By this procedure at selection of frequency pairs and time slots, the signal load in the system is minimized.

The strategy at allocation of time slots to mobile stations that request separate time slots is, at selection of frequency pair, in the first place to prioritize the frequency pairs that have the smallest number of free time slots, in the second place to prioritize the frequency pairs that have the smallest number of consecutive time slots, and in the third place to prioritize the frequency pair that carries the so called BCCH-frequency (Broadcast Channel). At the selection of a time slot, is in the first place prioritized the time slot that is located between two occupied time slots, and in the second place the time slot that is closest to the beginning or end of a frame.

The strategy at allocation of time slots to mobile stations that request a plurality of consecutive times slots is, at selection of frequency pair, in the first place to prioritize the frequency pairs that have the largest number of free time slots, in the second place the frequency pairs that have the largest number of consecutive time slots, and in the third place the frequency pair that does not carry the BCCH-frequency. At the selection of a set of consecutive time slots, is in the first place prioritized the set of time slots that is located between two occupied time slots, and in the second place the set of time slots that has the shortest distance to the beginning or end of a frame.

The invention is intended to be used in the existing GSM-system and there improve the strategy for allocation of radio resources for packet data services, such as at HSCSD "flexible service" and GPRS.

The channel allocation strategy according to the present invention has turned out to increase the data speed and reduce the probability of blocking for mobile stations in the GSM-system by offering a better utilization of the radio resources.

The invention provides in the allocation strategy three mechanisms, which all contribute to the increased data speed and the reduced probability of blocking, by maximal number of time slots being allocated to the mobile stations of the system. These mechanisms are: Downgrading of bandwidth that is allocated to a mobile station; upgrading of bandwidth that is allocated to a mobile station; and regrouping of channels allocated to different mobile stations. The signal load that these mechanisms give rise to are thoroughly compensated by the increased data speed and the reduced probability of blocking that the mechanisms make possible.

### Brief description of the drawings

Figure 1 shows a radio cell and its base station in a cellular radio system according to the present invention;
Figure 2 shows a frequency pair in a radio cell;
Figure 3a and 3b show a frequency pair of frames with allocated time slots;
Figure 4 shows a flow chart over an embodiment of the present invention;
Figure 5, 6a and 6b illustrate the concept of time slot distance; and
Figure 7 shows a flow chart over another embodiment of the present invention.

### Detailed description

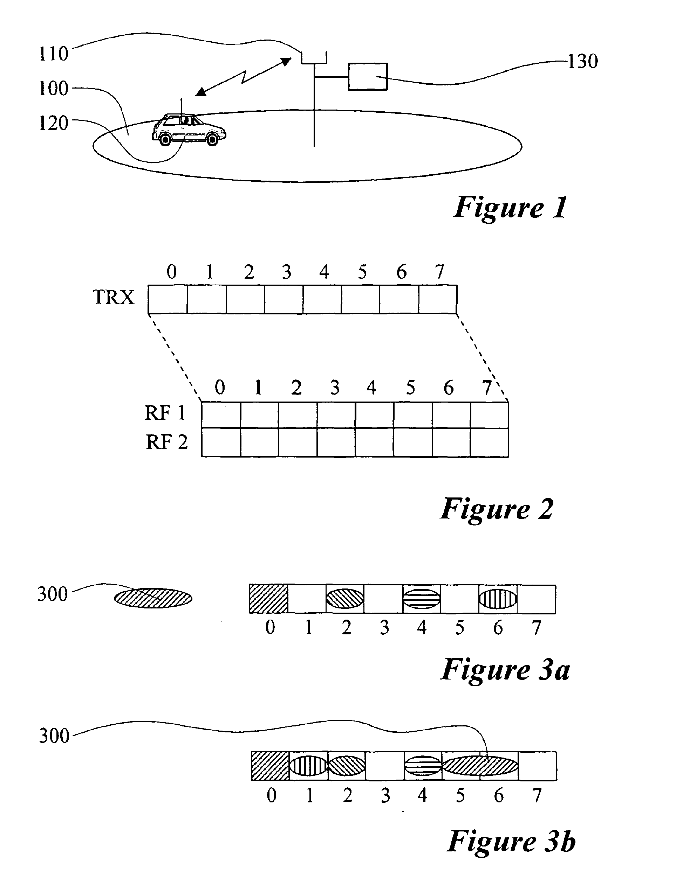

A cellular radio system according to the invention has a coverage area that is divided into a number of radio cells. Figure 1 shows an exemplified radio cell 100 and its base station 110. The base station 110 serves all mobile stations, for instance a mobile station 120 mounted in a vehicle, within the coverage area of the cell 100. Each cell in the radio system has been allocated a number of frequency pairs for communication between the base station of the cell 110 and the mobile stations 120 within the coverage area of the cell. Figure 1 also shows a device 130 according to the present invention. Device 130 for allocation of radio resources in the radio system is, from a communication point of view, connected or integrated with the base station 110

Figure 2 shows the construction of a frequency pair. A frequency pair, labeled TRX, consists of a frequency RF1 (radio frequency) for a downlink, and a frequency RF2 for an uplink. Each frequency RF1, RF2 is divided into recurrent frames of 8 time slots, numbered 0-7. If the system allocates, for instance, time slot 3 in the frequency pair for communication between a mobile station and a base station, this means that time slot 3 is allocated in the RF1 of the downlink for transmission of information from base station to mobile station, and that time slot 3 is allocated in the RF2 of the uplink for transmission of information from mobile station to base station. Each cell in the system has been allocated a number of frequency pairs.

Figure 3a shows a frame and its time slots for a certain frequency pair within a cell. Time slot number 0 is allocated for signaling of the system, and the time slots 1-7 are traffic channels at disposal for mobile stations in the cell. The time slots 2, 4, and 6 are in this example already allocated by mobile stations that utilize a service provided by the system. If a mobile station for utilization of an HSCSD-service now requests allocation of two consecutive time slots in this frame, which requested bandwidth is symbolized by the ellipse 300, such a request cannot immediately be met because there do not exist two free, consecutive time slots. A solution, except that the mobile station that has requested two consecutive time slots is blocked, is that the system by means of intracell handover regroups the allocation of time slots within the frame.

Figure 3b shows the same frame as figure 3a, but after a regrouping of the allocated time slots being made by means of the intracell-handover mechanism of the system. The traffic that previously in Figure 3a allocated time slot 6, now instead allocates time slot 1. Request from the mobile station for two consecutive time slots 300 therefore has been possible to satisfy, and the time slots 5 and 6 have been allocated for utilization of the mobile station. As has previously been mentioned, the intracell-handover mechanism requires some signaling capacity between the base station and mobile stations in question when synchronization to a new time slot or/and a new frequency within a cell shall be made.

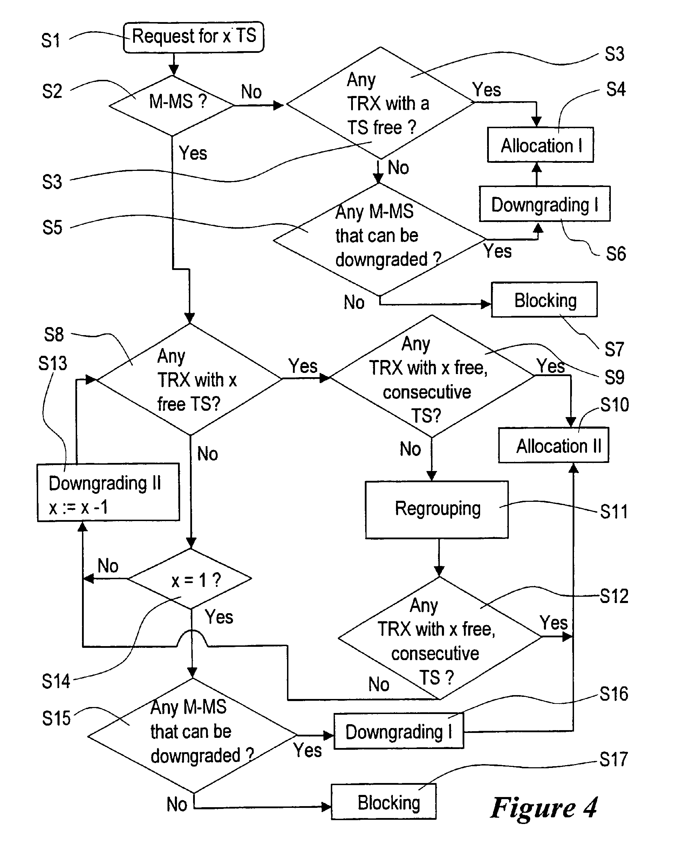

Figure 4 shows a flow chart over an embodiment of the present invention. The flow chart shows the process or algorithm that is run through at utilization of the invention. The process starts in step S1 by a mobile station requesting bandwidth in a cell. The requested bandwidth corresponds to x time slots (TS). The mobile station is either an S-MS, so called Single slot Mobile Station, or an M-MS, so-called Multislot Mobile Station. An S-MS is a mobile station that requests a time slot for communication in the system, i.e. x = 1, whereas an M-MS is a mobile station that requests more than one time slot for communication in the system, i.e. x > 1. In the present invention, M-MS are such mobile stations that request at least two consecutive time slots in a frequency pair, i.e. at least two consecutive time slots in the up- respective downlink. In step S2 is checked if the mobile station that requests bandwidth in the cell is an S-MS or an M-MS.

If the mobile station is an S-MS, is in step S3 checked if there in the cell is at least one frequency pair that has a time slot (TS) free. If the answer is yes, the procedure proceeds to step S4 for allocation of a time slot to the mobile station according to a procedure "Allocation I", which will be described in more detail below. If the answer in step S3 is no, is in step S5 checked if there is any M-MS that has allocated bandwidth in the cell and that can be downgraded. If that is the case, downgrading is made in step S6 according to a procedure "Downgrading I"; in other case the request for bandwidth of the mobile station is blocked in step 7, i.e. the mobile station is not allocated any bandwidth.

The blocking is, for instance, the normal blocking procedure in GSM. The procedure "Downgrading I" means that an M-MS is selected among all existing M-MS in the system, either by, for instance, a priority list made by operator, or quite at random, whereupon the system sets a time slot free by reducing the number of allocated time slots to the selected M-MS by 1. The time slot set free then can in step S4 be allocated to the mobile station S-MS that has requested bandwidth.

If the check in step S2 shows that the mobile station that requests bandwidth is an M-MS, the process instead proceeds to step S8. In step 8 is checked if there in the cell is any frequency pair that has x free time slots. If one or more such frequency pairs exist, the procedure proceeds to step S9, otherwise to step S14. In step S9 is checked if any of the frequency pairs has x free time slots which in addition are consecutive, i.e. free in a sequence. If that is the case, allocation is made of x consecutive time slots in step S10 according to a procedure "Allocation II", which will be described in detail below; if that is not the case, a regrouping is made in step S11 according to a procedure "Regrouping", which is also described in detail below. After the regrouping of time slots in step S11, is in step S12 again checked if there is a frequency pair with x free, consecutive time slots. If that is the case, is in step S10 an allocation made according to the procedure "Allocation II"; if that is not the case, the process proceeds to step S13 for downgrading according the procedure "Downgrading II". "Downgrading II" is a procedure that is performed in order to, with regard to the M-MS that has requested bandwidth in the cell, reduce the number of time slots that this M-MS has requested by one, i.e. x is set to x - 1.

If the check in step S8 shows that there in the cell does not exist any frequency pair with x free time slots, the procedure instead proceeds, as mentioned, to step S14. In step S14 is checked if x is equal to 1; if that is not the case, step 13 in the procedure "Downgrading II" is performed. After the "Downgrading II"-procedure being made, is again checked in step S8 if there is any frequency pair that has x free time slots, where now x has a numerical value that is smaller than at the previous check in this step. If the above-mentioned check in step S14 shows that x is equal to 1, the process instead proceeds to step S15. In step S15 is checked if any M-MS that has time slots allocated in the cell can be downgraded. If the answer is yes, the process proceeds to step S16, where downgrading is made according to the procedure "Downgrading I", which has been described above; after that, the process proceeds to step S10 for execution of the procedure "Allocation II". If the answer in step S15 is no, the M-MS that has requested bandwidth is blocked in step S17.

Before the procedures "Allocation I", "Allocation II" and "Regrouping" are described in detail, a concept that is used in these procedures need to be further explained; that is the concept of "time slot distance".

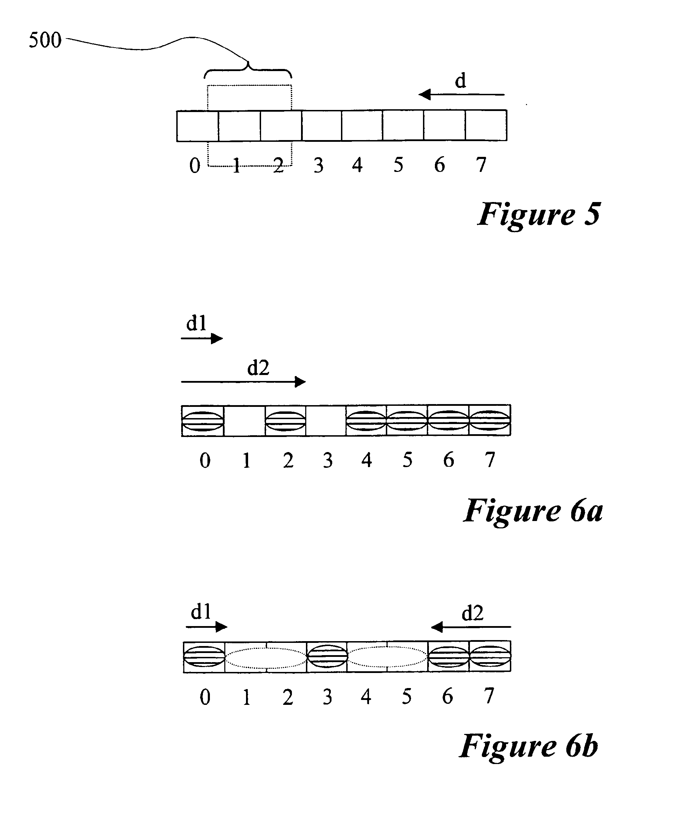

Figure 5 shows a frame with 8 time slots. The time slot distance of a time slot is the smallest distance a time slot has, counted in number of time slots, from any of the two edges of a frame, i.e. from the beginning or end of a frame. Time slot number 5 has for instance a distance of five time slots from the beginning of the frame, and a distance of two time slots from the end of the frame. The time slot distance for time slot 5 consequently is two time slots. Indicated in Figure 5 is also that a time slot window with two time slots. A time slot window is a logical means and is quite simply a window with a certain number of time slots that can be used to be scanned over the frame at the same time as the time slots of the frame that will fall within the window is analyzed by the system. This logical means is utilized at regrouping of allocated time slots in a frequency pair.

Figure 6a and 6b show further examples of time slot distances. In Figure 6a there are two separate, free time slots, namely the time slots number 1 and 3. The time slot distance for time slot 1 is indicated by d1 and for time slot 3 by d2; the values of d1 and d2 being one respective three. The time slot that has smallest time slot distance is time slot 1. In figure 6b there are two sets of consecutive time slots that are free, namely the sets with the time slots 1, 2 and 4, 5. The time slot distance for these sets are indicated by d1 respective d2; the values of d1 and d2 being one, respective two. The set that has the maximal time slot distance is the set with the time slots 4, 6.

### Allocation I

This procedure is intended to allocate a time slot to an S-MS. The system shall select both a TRX, i.e. a frequency pair, and a time slot in the selected TRX.

Suppose that F1 and F2 from the beginning are two empty amounts. The value of TRX from the amount of TRXes that has at least one time slot free is made as below:
1) Sort out all TRXes that have the smallest number of free time slots larger than zero and place these TRXes in the amount F1.
   - If the amount F1 only contains one element, go to point 4).
   - Otherwise proceed.
2) Sort out all TRXes in the amount F1 that have the smallest number of free, consecutive time slots and place these in the amount F2.
   - If the amount F2 only contains one element, go to point 4).
   - Otherwise proceed.
3) If the BCCH TRX is included in the amount F2, select the BCCH TRX; otherwise select randomly a TRX among all the TRXes that are in the amount F2. (BCCH, Broadcast Channel, is the frequency that carries the standardized broadcast channel and that contains at least one allocated signal time slot).
4) The TRX is selected.

Suppose that T0, T1 and T2 from the beginning are three empty amounts. The selection of time slot in the selected TRX is made as below:
1) Let T0 be the amount that contains all free time slots in the selected TRX.
2) Sort out all elements that are in T0 and which are located between two occupied time slots and place these time slots in the amount T1. Also free time slots that are adjacent to the beginning or end of a frame and which have an occupied time slot in its neighborhood are placed in T1.
   - If the amount T1 does not contain any element, the amount T1 is set equal to the amount T0.
   - If the amount T1 contains only one element, go to point 4).
   - Otherwise proceed.
3) Sort out all elements that are in T1 and which have the smallest time slot distance and place these in the amount T2. (The concept of "smallest time slot distance" has previously been described in connection with the Figures 5 and 6a). Select randomly an element from the amount T2.
4) Allocate the selected time slot to S-MS.

### Allocation II

This procedure is intended to allocate a set of consecutive time slots to an M-MS. An M-MS requests x (a numeral) consecutive time slots. A set of time slots can be one or more consecutive time slots that the system can offer. The system shall select both TRX, i.e. frequency pair, and a set of time slots that belongs to the selected TRX.

Suppose that F1 and F2 from the beginning are two empty amounts. The selection of TRX from the amount of TRXes that has a set of consecutive time slots free is made as below:
1) Sort out all TRX:es that have the maximal number of consecutive and free time slots and place these TRXes in the amount F1.
   - If the amount F1 contains only one element, go to point 4).
   - Otherwise proceed.
2) Sort out all TRXes that are in the amount F1 that have the maximal number of free time slots and place these in the amount F2.
   - If the amount F2 contains only one element, go to point 4).
   - Otherwise proceed.
3) If the BCCH TRX is in the amount F2, disregard the BCCH TRX, then select randomly a TRX among the remaining TRXes in the amount F2.
4) Select that TRX.

Suppose that T0, T1 and T2 from the beginning are three empty amounts. The selection of a set of time slots in the selected TRX is made as below:
1) Let T0 be the amount that contains all sets of x consecutive time slots in the selected TRX.
2) Sort out all free sets of x consecutive time slots in the amount T0 that are located between two occupied time slots, and place these in the amount T1. Also sets with x free, consecutive time slots adjacent to the beginning or end of a frame and that have an occupied time slot in its neighborhood are placed in T1.
   - If the amount T1 does not contain any element, the amount T1 is set equal to the amount T0.
   - If the amount T1 only contains one element, go to point 4).
   - Otherwise proceed.
3) Sort out all elements that are in the amount T1 that have the maximal time slot distance and place these in the amount T2. (The concept of "maximal time slot distance" has previously been described in connection with the Figures 5 and 6b). Select randomly an element from the amount T2.
4) Allocate the selected set of time slots to the mobile station.

### Regrouping

This procedure is intended to "reshuffle", or regroup, allocations of time slots among the frequency pairs so that consecutive sets of time slots are created. The system shall select both a TRX, i.e. a frequency pair, and in this TRX x consecutive time slots that shall be allocated to the M-MS that has requested bandwidth. At the same time the system shall appoint the mobile station, the allocation of which, of one or more time slots, shall be regrouped.

Suppose that F1 from the beginning is an empty amount. The selection of TRX from the amount of TRX:es that has a set of consecutive time slots free is made as below:
1) Sort out all TRX:es that have the maximal number of free time slots and place these TRX:es in the amount F1.
2) Select one element from F1. The selection can be made at random, or by using a priority list set by the operator.
3) Select that TRX.

The selection of the MS/MS:es the time slot allocations
of which shall be regrouped by intracell handover, in order to create free, consecutive time slots to an M-MS that has requested bandwidth, is made as below, where T1 and T2 are two from the beginning empty amounts:
1) Scan a time slot window of x consecutive window slots over the selected TRX and sort out all groups of S-MS:es that are in the TRX, and place these in the amount T1. These S-MS:es shall, when they are in the time slot window, provide the smallest total number of occupied time slots.
   - If T1 does not contain any element, go to point 3).
   - Otherwise proceed.
2) Sort out all elements of S-MS-groups existing in the amount T1 that have the highest time slot distance and place these in the amount T2. Go to point 5).
3) Sort out all existing M-MS:es in the selected TRX and place these in the amount T1.
4) Sort out all M-MS:es existing in the amount T1 that have the highest time slot distance and place these in the amount T2.
5) Select an element from T2. The selection is made at random or according to a priority list set by the operator.
6) The element/elements selected from T2 are the appointed mobile station/stations that shall make intracell handover. New time slots are allocated to the appointed MS/MS:es. This allocation is made according to previously described allocation procedures for S-MS respective M-MS, namely Allocation I respective Allocation II.

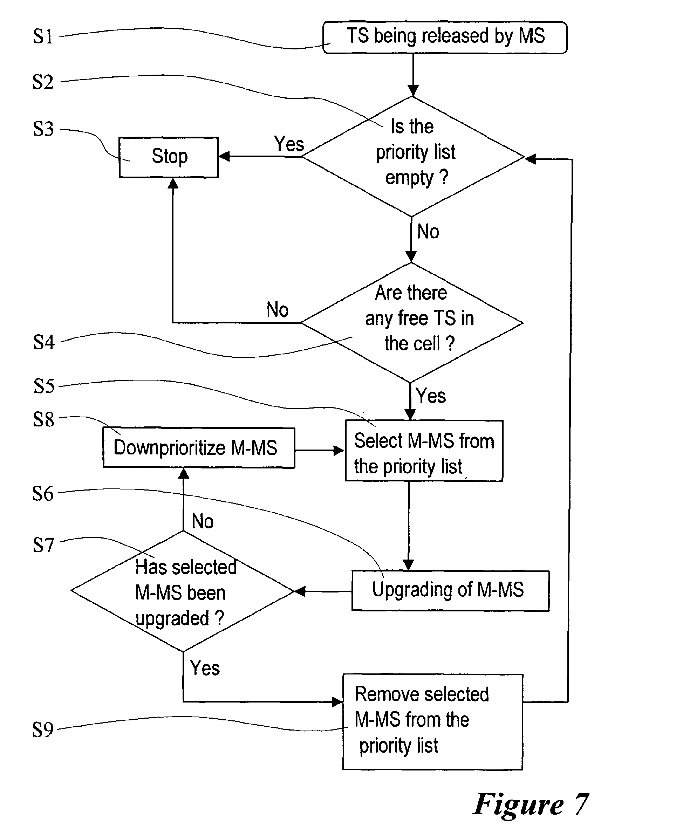

Figure 7 shows a flow chart over another embodiment of the present invention. The flow chart shows the process or algorithm that is run through at utilization of the invention when a mobile station that has previously had time slots allocated no longer need this bandwidth.

The process starts in step S1 by a mobile station leaving a cell or stops utilizing a service in a cell, by that times slots are made free for allocation by other mobile stations that have requested bandwidth in the cell. In step S2 is checked if the priority list of the cell is empty. The priority list is a list over all M-MS:es in the cell that need to be upgraded, i.e. of the M-MS:es that only have been able to allocate a subset of the bandwidth they have requested, and which still has a need of allocating more time slots. The priority can be set by the operator himself/herself, for instance depending on priority of utilized service, or how many time slots each mobile station has allocated. If this list is empty, the execution of the process is stopped in step S3; if the list is not empty, the process proceeds to step S4. In step S4 is checked if there are any free time slots (TS:es) in the frequency pair of the cell. If the answer is no, the process is stopped in step S3; if the answer is yes, the process proceeds to step S5. Step 5 is a procedure to appoint the highest prioritized element in the priority list, the resulting appointed mobile station M-MS is below called Z.

The process then proceeds to step S6, which is a procedure to allocate time slots to the mobile station Z, supposing that Z is a mobile station with a new request for bandwidth in the cell. This allocation is made according to what has been described by the flow chart in Figure 4 and its belonging text. The allocation procedure itself consequently is the same. Because the mobile station Z, which is upgraded, always is an M-MS, the procedure "Allocation II" will be used, and that part of the flow chart in Figure 4 that concerns S-MS mobile stations will not be utilized at upgrading. What x indicates in the flow chart in Figure 4 can be the number of the time slots that mobile station Z has requested, or an operator controlled amount that is put in relation to the amount of time slots that Z previously has allocated.

In step S7 is then checked if mobile station Z has been upgraded. If that has not been made, Z is downprioritized in step S8, and after that an M-MS is again selected from the priority list in step S5. Downprioritizing of Z is an operator controlled procedure and can, for instance, be to place Z on second or the last place in the priority list. If the check in S7 shows that Z has been upgraded, the procedure proceeds to step S9 for removal of Z from the priority list; after that the process returns to step S2 to again check if there are any elements in the priority list.

It is to the expert obvious that the processes that have been described above with advantage can be implemented as dedicated software for execution by one or more, more or less general, micro processors. The micro processor/processors is/are at that, according to what has been described in connection to Figure 1 above, from a communication point of view, connected to the base station in the cell the provided bandwidth of which is the object of the above described processes/procedures.

Even if the invention above has been described with reference to specific, exemplified embodiments, variants and modifications of these embodiments can be effected as it is worded in the enclosed patent claims.

## Claims

1. Procedure of allocation of radio resources in form of time slots of a cellular radio system, in which system a cell (100) has at its disposal an amount of frequency pairs, at which each time slot in a frame in a frequency pair is constituted by a time slot in a frame in an uplink and a corresponding time slot in a frame in a downlink, and in which system a first mobile station (120) for communication in a cell (100) requests bandwidth in form of one or more consecutive time slots, wherein the allocation of said one or more time slots to the first mobile station (120) includes the steps:
to select a frequency pair, among said amount of frequency pairs of the cell (100), based on the number of free, consecutive time slots in respective frequency pair;
to select one or more free, consecutive time slots in the selected frequency pair, based on the location of said one or more free time slots in the frame of time slots of the selected frequency pair; and
to allocate the selected time slot/slots to the mobile station (120).

2. Procedure, as claimed in claim 1, at which the step to select a frequency pair is made depending on the number of time slots that is constituted by the requested bandwidth of the mobile station.

3. Procedure, as claimed in claim 1 or 2, at which the step to select a frequency pair includes any of the following steps:
to randomly select a frequency pair from the subset of frequency pairs of the cell that has the smallest number of free, consecutive time slots, if the requested bandwidth of the mobile station corresponds to one time slot; and
to randomly select a frequency pair from the subset of frequency pairs of the cell that has the largest number of free, consecutive time slots, if the requested bandwidth of the mobile station corresponds to at least two time slots.

4. Procedure, as claimed in any of the claims 1-3, at which the step to select one or more free, consecutive time slots includes to select one or more time slots from an amount of free time slots that are defined by the time slots that either are located between two of the occupied time slots of respective frame, or at the beginning or the end of respective frame and adjacent to an occupied time slot.

5. Procedure, as claimed in claim 4, at which the selection of one or more free, consecutive time slots is based on a time slot distance that the time slots in the amount of free time slots have, which time slot distance is defined as the smallest distance a time slot has, counted in number of time slots, from the beginning or end of a frame.

6. Procedure, as claimed in claim 5, at which the selection of a time slot from said amount is made randomly among the time slots of the amount that have the smallest time slot distance, when said first mobile station has requested a time slot.

7. Procedure, as claimed in claim 5, at which the selection of one or more time slots from said amount is made randomly among the time slots of the amount that have the greatest time slot distance, when said first mobile station has requested more than one time slot.

8. Procedure, as claimed in any of the claims 1-5, or 7, at which allocation of two or more free, consecutive times slots if necessary is made possible by regrouping of occupied time slots in a frame, provided that requested number of time slots are free, but not consecutively free, in the frame of at least one frequency pair, at which the regrouping includes the steps:
to select a frequency pair from the subset of frequency pairs that has the largest number of free time slots;
to select one or more occupied time slots that have the greatest distance, counted in number of time slots, from the beginning or end of respective frame; and
to perform intracell handover with regard to the mobile station/stations that has/have the selected, occupied time slot/slots allocated, at which new time slots are allocated to this or these mobile station/stations.

9. Procedure, as claimed in any of the claims 1-8, including to deallocate a time slot from a second mobile station that has at least two time slots allocated, which second mobile station is selected randomly or according to a predefined priority list, if there is no frequency pair at the cell that has a time slot free for allocation to the first mobile station, when this has requested one or more time slots.

10. Procedure, as claimed in any of the claims 1-5, or 7-9, at which the procedure is performed at least one more time to increase the number of allocated time slots to said first mobile station, if only a subset of the time slots that corresponds to the requested bandwidth of the first mobile station has been allocated to the first mobile station.

11. Procedure, as claimed in claim 9, at which said priority list is based on the priority of the service that said second mobile station is utilizing.

12. Procedure, as claimed in any of the claims 1-11, at which allocation of two or more consecutive time slots is made when said first mobile station requests an HSCSD-connection in the cell.

13. Device for allocation of radio resources in form of time slots of a cellular radio system, in which system a cell (100) has at its disposal an amount of frequency pairs, at which each time slot in a frame in a frequency pair is constituted by a time slot in a frame in an uplink and a corresponding time slot in a frame in a downlink, and in which system a first mobile station (120) for communication in a cell (100) is adapted to request bandwidth in form of one or more consecutive time slots, at which the device for allocation of said one or more time slots to the first mobile station (120) includes:
first device adapted to select a frequency pair, among said amount of frequency pairs of the cell (100), based on the number of free, consecutive time slots in respective frequency pair;
second device adapted to select one or more free, consecutive time slots in the selected frequency pair, based on the location of said one or more free time slots in the frame of the selected frequency pair of time slots; and
third device adapted to allocate the selected time slot/slots to the mobile station (120),

14. Device, as claimed in claim 13, at which said first device is arranged to select a frequency pair depending on the number of time slots that is constituted by the bandwidth requested by the mobile station.

15. Device, as claimed in claim 13 or 14, at which said first device is arranged to:
randomly select a frequency pair from the subset of frequency pairs of the cell that has smallest number of free, consecutive time slots, if the bandwidth requested by the mobile station corresponds to one time slot; and
randomly select a frequency pair from the subset of frequency pairs of the cell that has largest number of free, consecutive time slots, if the bandwidth requested by the mobile station corresponds to at least two time slots.

16. Device, as claimed in any of the claims 13-15, at which said second device is arranged to select one or more time slots from an amount of free time slots that are defined by the time slots that either are located between two of the occupied time slots of respective frame, or at the beginning or end of respective frame, and adjacent to an occupied time slot.

17. Device, as claimed in claim 16, at which said second device is arranged to select one or more free, consecutive time slots based on a time slot distance that the time slots of the amount of free time slots have, which time slot distance is defined as the smallest distance that a time slot has, counted in number of time slots, from the beginning or end of a frame.

18. Device, as claimed in claim 17, at which said second device is arranged to, from said amount, randomly select a time slot among the time slots of the amount that has the smallest time slot distance, when said first mobile station has requested a time slot.

19. Device, as claimed in claim 17, at which said second device is arranged to, from said amount, randomly select one or more time slots among the time slots of the amount that has the greatest time slot distance, when said first mobile station has requested more than one time slot.

20. Device, as claimed in any of the claims 13-17, or 19, including fourth device arranged to regroup occupied time slots in a frame, which regrouping presupposes that requested number of time slots are free, but not consecutively free, in the frame of at least one frequency pair, at which said fourth device includes:
device adapted to select a frequency pair from the subset of frequency pairs that has the largest number of free time slots;
device adapted to select one or more occupied time slots that have the greatest distance, counted in number of time slots, from the beginning or end of respective frame; and
device adapted to initiate intracell handover with regard to the mobile station/stations that has/have the selected, occupied time slot/slots allocated, at which new time slots are allocated to this, or these, mobile stations.

21. Device, as claimed in any of the claims 13-20, including fifth device adapted to deallocate a time slot from a second mobile station that has at least two time slots allocated, which second mobile station by the fifth device is selected randomly, or according to a predefined priority list.

22. Device, as claimed in claim 21, at which said priority list is based on the priority of the service that said second mobile station utilizes.

23. Device, as claimed in any of the claims 13-22, at which the device is adapted to perform allocation of two or more consecutive time slots when said first mobile station requests an HSCSD-connection in the cell.

## Patentansprüche

1. Verfahren der Zuteilung von Funkressourcen in Form von Zeitschlitzen eines zellularen Funksystems, in welchem System einer Zelle (100) eine Menge von Frequenzpaaren zur Verfügung steht, wobei jeder Zeitschlitz in einem Datenblock in einem Frequenzpaar durch einen Zeitschlitz in einem Datenblock in einer Aufwärtsverbindung und einem entsprechenden Zeitschlitz in einem Datenblock in einer Abwärtsverbindung gebildet ist, und in welchem System eine erste mobile Station (120) für Kommunikation einer Zelle (100) Bandbreite in Form von einem oder mehreren aufeinanderfolgenden Zeitschlitzen anfordert, wobei die Zuteilung von dem einen oder mehreren Zeitschlitzen zu der ersten mobilen Station (120) die Schritte einschließt:
ein Frequenzpaar aus der Menge von Frequenzpaaren der Zelle (100) beruhend auf der Anzahl von freien aufeinanderfolgenden Zeitschlitzen in entsprechendem Frequenzpaar auszuwählen;
einen oder mehrere freie aufeinanderfolgende Zeitschlitze in dem ausgewählten Frequenzpaar beruhend auf der Stelle der einen oder mehreren freien Zeitschlitze in dem Datenblock von Zeitschlitzen des ausgewählten Frequenzpaars auszuwählen; und
den/die ausgewählte(n) Zeitschlitz(e) der mobilen Station (120) zuzuteilen.

2. Verfahren nach Anspruch 1, bei dem der Schritt, ein Frequenzpaar auszuwählen, in Abhängigkeit von der Anzahl von Zeitschlitzen gemacht wird, die durch die angeforderte Bandbreite der Mobilstation gebildet ist.

3. Verfahren nach Anspruch 1 oder 2, bei dem der Schritt, ein Frequenzpaar auszuwählen, einen der folgenden Schritte einschließt:
zufällig ein Frequenzpaar von der Untermenge von Frequenzpaaren der Zelle auszuwählen, das die kleinste Anzahl von freien aufeinanderfolgenden Zeitschlitzen hat, wenn die angeforderte Bandbreite der mobilen Station einem Zeitschlitz entspricht; und
zufällig ein Frequenzpaar aus der Untermenge von Frequenzpaaren der Zelle auszuwählen, das die größte Anzahl von freien aufeinanderfolgenden Zeitschlitzen hat, wenn die angeforderte Bandbreite der mobilen Station wenigstens zwei Zeitschlitzen entspricht.

4. Verfahren nach einem der Ansprüche 1 bis 3, bei dem der Schritt, einen oder mehrere freie aufeinanderfolgende Zeitschlitze auszuwählen, es einschließt, einen oder mehrere Zeitschlitze von einer Menge von freien Zeitschlitzen auszuwählen, die durch die Zeitschlitze definiert werden, die entweder zwischen zwei der besetzten Zeitschlitze eines entsprechenden Datenblocks angeordnet sind oder am Anfang oder am Ende entsprechender Datenblöcke und benachbart zu einem besetzten Zeitschlitz angeordnet sind.

5. Verfahren nach Anspruch 4, bei dem die Auswahl der einen oder mehreren freien aufeinanderfolgenden Zeitschlitze auf einem Zeitschlitzabstand beruht, den die Zeitschlitze in der Menge von freien Zeitschlitzen haben, welcher Zeitschlitzabstand als der kleine Abstand definiert ist, den ein Zeitschlitz, gezählt in der Anzahl von Zeitschlitzen, vom Anfang oder vom Ende eines Datenblocks hat.

6. Verfahren nach Anspruch 5, bei dem die Auswahl eines Zeitschlitzes von der Menge zufällig unter den Zeitschlitzen der Menge vorgenommen wird, die den kleinsten Zeitschlitzabstand haben, wenn die erste mobile Station einen Zeitschlitz angefordert hat.

7. Verfahren nach Anspruch 5, bei dem die Auswahl von einem oder mehreren Zeitschlitzen von der Menge zufällig unter den Zeitschlitzen der Menge vorgenommen wird, die den größten Zeitschlitzabstand haben, wenn die erste mobile Station mehr als einen Zeitschlitz angefordert hat.

8. Verfahren nach einem der Ansprüche 1 bis 5 oder 7, bei dem die Zuteilung von einem oder mehreren freien aufeinanderfolgenden Zeitschlitzen falls notwendig durch Umgruppierung der besetzten Zeitschlitze in einem Datenblock ermöglicht wird, vorausgesetzt, dass die angeforderte Anzahl von Zeitschlitzen frei, aber nicht aufeinanderfolgend frei, in dem Datenblock von wenigstens einem Frequenzpaar sind, wobei das Umgruppieren die Schritte einschließt:
ein Frequenzpaar aus der Untermenge von Frequenzpaaren auszuwählen, die die größte Anzahl von freien Zeitschlitzen hat;
einen oder mehrere besetzte Zeitschlitze auszuwählen, die den größten Abstand gezählt in der Anzahl von Zeitschlitzen vom Anfang oder vom Ende der entsprechenden Datenblocks haben; und
Übergabe innerhalb der Zelle in Bezug auf die mobile Station/mobilen Stationen durchzuführen, der/denen der/die ausgewählte(n) besetzte(n) Zeitschlitz/Zeitschlitze zugeteilt sind, wobei Zeitschlitze dieser mobilen Station oder diesen mobilen Stationen zugeteilt werden.

9. Verfahren nach einem der Ansprüche 1 bis 8, das es einschließt, einen Zeitschlitz von einer zweiten mobilen Station wegzunehmen, der wenigstens zwei Zeitschlitze zugeteilt sind, welche zweite mobile Station zufällig oder entsprechend einer vorbestimmten Prioritätsliste ausgewählt wird, wenn es kein Frequenzpaar bei der Zelle gibt, das einen Zeitschlitz für Zuteilung zur ersten mobilen Station frei hat, wenn diese einen oder mehrere Zeitschlitze angefordert hat.

10. Verfahren nach einem der Ansprüche 1 bis 5 oder 7 bis 9, bei dem das Verfahren wenigstens ein weiteres Mal durchgeführt wird, um die Anzahl der zugeteilten Zeitschlitze zu der ersten mobilen Station zu erhöhen, wenn nur eine Untermenge der Zeitschlitze, die der angeforderten Bandbreite der ersten mobilen Station entspricht, der ersten mobilen Station zugeteilt worden ist.

11. Verfahren nach Anspruch 9, bei dem die Prioritätsliste aus der Priorität des Dienstes beruht, den die zweite mobile Station verwendet.

12. Verfahren nach einem der Ansprüche 1 bis 11, bei dem die Zuteilung von zwei oder mehr aufeinanderfolgenden Zeitschlitzen vorgenommen wird, wenn die erste mobile Station eine HSCSD-Verbindung in der Zelle anfordert.

13. Vorrichtung für Zuteilung von Funkressourcen in Form von Zeitschlitzen eines zellularen Funksystems, in welchem System eine Zelle (100) eine Menge von Frequenzpaaren zur Verfügung hat, wobei jeder Zeitschlitz in einem Datenblock in einem Frequenzpaar durch einen Zeitschlitz in einem Datenblock in einer Aufwärtsverbindung und einem entsprechenden Zeitschlitz in einem Datenblock in einer Abwärtsverbindung gebildet wird, und in welchem System eine erste mobile Station (120) für Kommunikation in einer Zelle (100) dazu ausgebildet ist, Bandbreite in Form von einem oder mehreren aufeinanderfolgenden Zeitschlitzen anzufordern, wobei die Vorrichtung für Zuteilung des einen oder der mehreren Zeitschlitze der ersten mobilen Station (120) einschließt:
erste Einrichtung, die dazu ausgebildet ist, ein Frequenzpaar aus der Menge von Frequenzpaaren der Zelle (100) beruhend auf der Anzahl freier aufeinanderfolgender Zeitschlitze in entsprechendem Frequenzpaar auszuwählen;
zweite Einrichtung, die dazu ausgebildet ist, einen oder mehrere freie aufeinanderfolgende Zeitschlitze in dem ausgewählten Frequenzpaar beruhend auf der Stelle des einen oder der mehreren freien Zeitschlitz im Datenblock des ausgewählten Frequenzpaars von Zeitschlitzen auszuwählen; und
dritte Einrichtung, die dazu ausgebildet ist, den ausgewählten Zeitschlitz/die ausgewählten Zeitschlitze der mobilen Station (100) zuzuteilen.

14. Vorrichtung nach Anspruch 13, bei der die erste Einrichtung dazu ausgebildet ist, ein Frequenzpaar von der Anzahl von Zeitschlitzen abhängig auszuwählen, die durch die Bandbreite gebildet wird, die durch die mobile Station angefordert wird.

15. Vorrichtung nach Anspruch 13 oder 14, bei der die erste Vorrichtung dazu ausgebildet ist:
zufällig ein Frequenzpaar von der Untermenge von Frequenzpaaren der Zelle auszuwählen, das die kleinste Anzahl von freien aufeinanderfolgenden Zeitschlitzen hat, wenn die durch die mobile Station angeforderte Bandbreite einem Zeitschlitz entspricht; und
zufällig ein Frequenzpaar aus der Untermenge von Frequenzpaaren der Zelle auszuwählen, das die größte Anzahl von freien aufeinanderfolgenden Zeitschlitzen hat, wenn die durch die mobile Station angeforderte Bandbreite wenigstens zwei Zeitschlitzen entspricht.

16. Vorrichtung nach einem der Ansprüche 13 bis 15, bei der die zweite Vorrichtung dazu ausgebildet ist, einen oder mehrere Zeitschlitze von einer Menge von freien Zeitschlitzen auszuwählen, die durch die Zeitschlitze definiert werden, die entweder zwischen zwei der besetzten Zeitschlitze eines entsprechenden Datenblocks oder am Anfang oder am Ende des entsprechenden Datenblocks und einem besetzten Zeitschlitz benachbart angeordnet sind.

17. Vorrichtung nach Anspruch 16, bei der die zweite Einrichtung dazu ausgebildet ist, einen oder mehrere aufeinanderfolgende Zeitschlitze beruhend auf einem Zeitschlitzabstand auszuwählen, den die Zeitschlitze der Menge von freien Zeitschlitzen haben, welcher Zeitschlitzabstand als der kleinste Abstand definiert ist, den ein Zeitschlitz gezählt in Anzahl von Zeitschlitzen vom Anfang oder Ende eines Datenblocks hat.

18. Vorrichtung nach Anspruch 17, bei der die zweite Einrichtung dazu ausgebildet ist, von der Menge zufällig einen Zeitschlitz unter den Zeitschlitzen der Menge auszuwählen, die den kleinsten Zeitschlitzabstand hat, wenn die erste mobile Station einen Zeitschlitz angefordert hat.

19. Vorrichtung nach Anspruch 17, bei der die zweite Einrichtung dazu ausgebildet ist, aus der Menge zufällig einen oder mehrere Zeitschlitze unter den Zeitschlitzen der Menge auszuwählen, die den größten Zeitschlitzabstand hat, wenn die erste mobile Station mehr als einen Zeitschlitz angefordert hat.

20. Vorrichtung nach einem der Ansprüche 13 bis 17 oder 19, der vierte Einrichtung einschließt, die dazu ausgebildet ist, besetzte Zeitschlitze in einem Datenblock umzugruppieren, welche Umgruppierung voraussetzt, dass eine angeforderte Anzahl von Zeitschlitzen frei, aber nicht aufeinanderfolgend frei in dem Datenblock von wenigstens einem Frequenzpaar ist, wobei die vierte Einrichtung einschließt:
Einrichtung, die dazu ausgebildet ist, ein Frequenzpaar von der Untermenge von Frequenzpaaren auszuwählen, das die größte Anzahl von freien Zeitschlitzen hat;
Einrichtung, die dazu ausgebildet ist, einen oder mehrere besetzte Zeitschlitze auszuwählen, die den größten Abstand gezählt in der Anzahl von Zeitschlitzen vom Anfang oder Ende des entsprechenden Datenblocks haben; und
Einrichtung, die dazu ausgebildet ist, Übergabe innerhalb der Zelle in Bezug auf die mobile Station/die mobilen Stationen einzuleiten, der/denen der/die ausgewählte(n) besetzte(m) Zeitschlitz/Zeitschlitze zugeteilt ist/sind, wobei neue Zeitschlitze dieser mobilen Station oder diesen mobilen Stationen zugeteilt werden.

21. Vorrichtung nach einem der Ansprüche 13 bis 20, die fünfte Einrichtung einschließt, die dazu ausgebildet ist, einen Zeitschlitz von einer zweiten mobilen Station wegzunehmen, der wenigstens zwei Zeitschlitze zugeteilt sind, welche zweite mobile Station durch die fünfte Einrichtung zufällig oder gemäß einer vorbestimmten Prioritätsliste ausgewählt wird.

22. Vorrichtung nach Anspruch 21, bei der die Prioritätsliste auf der Priorität des Dienstes beruht, den die zweite mobile Station verwendet.

23. Vorrichtung nach einem der Ansprüche 13 bis 22, bei der die Vorrichtung dazu ausgebildet ist, Zuteilung von zwei oder mehr aufeinanderfolgenden Zeitschlitzen durchzuführen, wenn die erste mobile Station eine HSCSD-Verbindung in der Zelle anfordert.

## Revendications

1. Procédure d'attribution de ressources radio sous forme d'intervalles de temps d'un système radio cellulaire, dans lequel système une cellule (100) a à sa disposition une quantité de paires de fréquences, dans laquelle chaque intervalle de temps dans une trame dans une paire de fréquences est constitué par un intervalle de temps dans une trame dans une liaison montante et par un intervalle de temps correspondant dans une trame dans une liaison descendante, et dans lequel système une première station mobile (120) pour communication dans une cellule (100) demande une largeur de bande sous forme d'un ou plusieurs intervalles de temps consécutifs, dans laquelle l'attribution des dits un ou plusieurs intervalles de temps à la première station mobile (120) comprend les étapes suivantes :
sélection d'une paire de fréquences, parmi la dite quantité de paires de fréquences de la cellule (100), sur la base du nombre d'intervalles de temps libres consécutifs dans la paire de fréquences respective ;
sélection d'un ou plusieurs intervalles de temps libres consécutifs dans la paire de fréquences sélectionnée, sur la base de la position des dits un ou plusieurs intervalles de temps libres dans la trame d'intervalles de temps de la paire de fréquences sélectionnée ; et
attribution de l'intervalle / des intervalles de temps sélectionnées à la station mobile (120).

2. Procédure selon la revendication 1, dans laquelle l'étape de sélection d'une paire de fréquences est effectuée en fonction du nombre d'intervalles de temps qui est constitué par la largeur de bande requise de la station mobile.

3. Procédure selon la revendication 1 ou 2, dans laquelle l'étape de sélection d'une paire de fréquences comprend une quelconque des étapes suivantes :
sélection au hasard d'une paire de fréquences, parmi le sous-ensemble de paires de fréquences de la cellule, qui a le plus petit nombre d'intervalles de temps libres consécutifs, si la largeur de bande requise de la station mobile correspond à un seul intervalle de temps ; et
sélection au hasard d'une paire de fréquences, parmi le sous-ensemble de paires de fréquences de la cellule, qui a le plus grand nombre d'intervalles de temps libres consécutifs, si la largeur de bande requise de la station mobile correspond à au moins deux intervalles de temps.

4. Procédure selon une quelconque des revendications 1 à 3, dans laquelle l'étape de sélection d'un ou plusieurs intervalles de temps libres consécutifs comprend la sélection d'un ou plusieurs intervalles de temps parmi une quantité d'intervalles de temps libres qui sont définis par des intervalles de temps qui sont situés soit entre deux des intervalles de temps occupés de la trame respective, soit au début ou à la fin d'une trame respective et adjacents à un intervalle de temps occupé.

5. Procédure selon la revendication 4, dans laquelle la sélection d'un ou plusieurs intervalles de temps libres consécutifs est basée sur une distance, en intervalles de temps, qu'ont les intervalles de temps dans la quantité d'intervalles de temps libres, cette distance en intervalles de temps étant définie comme la plus petite distance qu'a un intervalle de temps, comptée en nombre d'intervalles de temps, par rapport au début ou à la fin d'une trame.

6. Procédure selon la revendication 5, dans laquelle la sélection d'un intervalle de temps parmi la dite quantité est effectuée au hasard parmi les intervalles de temps de la dite quantité qui ont la plus petite distance en intervalles de temps lorsque la dite première station mobile a demandé un intervalle de temps.

7. Procédure selon la revendication 5, dans laquelle la sélection d'un ou plusieurs intervalles de temps parmi la dite quantité est effectuée au hasard parmi les intervalles de temps de la dite quantité qui ont la plus grande distance en intervalles de temps, lorsque la dite première station mobile a demandé plus d'un intervalle de temps.

8. Procédure selon une quelconque des revendications 1 à 5 ou 7, dans laquelle l'attribution de deux ou plusieurs intervalles de temps libres consécutifs si nécessaire est rendue possible par regroupement d'intervalles de temps occupés dans une trame, pourvu que le nombre requis d'intervalles de temps soient libres, mais non libres consécutivement, dans la trame d'au moins une paire de fréquences,
dans laquelle le regroupement comprend les étapes de :
sélection d'une paire de fréquences parmi le sous-ensemble de paires de fréquences qui a le plus grand nombre d'intervalles de temps libres ;
sélection d'un ou plusieurs intervalles de temps occupés qui ont la plus grande distance, comptée en nombre d'intervalles de temps, par rapport au début ou à la fin de la trame respective ; et
exécution d'un transfert intracellule en ce qui concerne la station / les stations mobiles qui a / ont l'intervalle / les intervalles de temps occupés attribués, de sorte que de nouveaux intervalles de temps sont attribués à cette station / ces stations mobiles.

9. Procédure selon une quelconque des revendications 1 à 8, incluant la désaffectation d'un intervalle de temps d'une deuxième station mobile qui possède au moins deux intervalles de temps attribués, cette deuxième station mobile étant choisie au hasard ou conformément à une liste de priorité prédéfinie, s'il n'y a pas de paire de fréquences à la cellule qui possède un intervalle de temps libre pour attribution à la première station mobile, lorsque celle-ci a demandé un ou plusieurs intervalles de temps.

10. Procédure selon une quelconque des revendications 1 à 5 ou 7 à 9, dans laquelle la procédure est effectuée au moins une fois de plus pour augmenter le nombre d'intervalles de temps attribués à la dite première station mobile, si un seul sous-ensemble des intervalles de temps qui correspond à la largeur de bande demandée de la première station mobile a été attribué à la première station mobile.

11. Procédure selon la revendication 9, dans laquelle la dite liste de priorité est basée sur la priorité du service que la dite deuxième station mobile utilise.

12. Procédure selon une quelconque des revendications 1 à 11, dans laquelle l'attribution de deux ou plus intervalles de temps consécutifs est effectuée lorsque la dite première station mobile demande une connexion HSCSD dans la cellule.

13. Dispositif pour l'attribution de ressources radio sous forme d'intervalles de temps d'un système radio cellulaire, dans lequel système une cellule (100) a à sa disposition une quantité de paires de fréquences, dans lequel chaque intervalle de temps dans une trame dans une paire de fréquences est constitué par un intervalle de temps dans une trame dans une liaison montante et par un intervalle de temps correspondant dans une trame dans une liaison descendante, et dans lequel système une première station mobile (120) pour communication dans une cellule (100) est prévue pour demander une largeur de bande sous forme d'un ou plusieurs intervalles de temps consécutifs, dans lequel le dispositif pour l'attribution des dits un ou plusieurs intervalles de temps à la première station mobile (120) comprend :
un premier dispositif prévu pour la sélection d'une paire de fréquences, parmi la dite quantité de paires de fréquences de la cellule (100), sur la base du nombre d'intervalles de temps libres consécutifs dans la paire de fréquences respective ;
un deuxième dispositif prévu pour la sélection d'un ou plusieurs intervalles de temps libres consécutifs dans la paire de fréquences sélectionnée, sur la base de la position des dits un ou plusieurs intervalles de temps libres dans la trame d'intervalles de temps de la paire de fréquences sélectionnée ; et
un troisième dispositif prévu pour l'attribution de l'intervalle / des intervalles de temps sélectionnés à la station mobile (120).

14. Dispositif selon la revendication 13, dans lequel le dit premier dispositif est prévu pour sélectionner une paire de fréquences en fonction du nombre d'intervalles de temps qui est constitué par la largeur de bande demandée par la station mobile.

15. Dispositif selon la revendication 13 ou 14, dans lequel le dit premier dispositif est prévu pour :
la sélection au hasard d'une paire de fréquences, parmi le sous-ensemble de paires de fréquences de la cellule, qui a le plus petit nombre d'intervalles de temps libres consécutifs, si la largeur de bande requise de la station mobile correspond à un seul intervalle de temps ; et
la sélection au hasard d'une paire de fréquences, parmi le sous-ensemble de paires de fréquences de la cellule, qui a le plus grand nombre d'intervalles de temps libres consécutifs, si la largeur de bande requise de la station mobile correspond à au moins deux intervalles de temps.

16. Dispositif selon une quelconque des revendications 13 à 15, dans lequel le dit deuxième dispositif est prévu pour la sélection d'un ou plusieurs intervalles de temps libres parmi une quantité d'intervalles de temps libres qui sont définis par les intervalles de temps qui sont situés soit entre deux des intervalles de temps occupés de la trame respective, soit au début ou à la fin d'une trame respective et adjacents à un intervalle de temps occupé.

17. Dispositif selon la revendication 16, dans lequel le dit deuxième dispositif est prévu pour la sélection d'un ou plusieurs intervalles de temps libres consécutifs sur la base d'une distance, en intervalles de temps, qu'ont les intervalles de temps dans la quantité d'intervalles de temps libres, cette distance en intervalles de temps étant définie comme la plus petite distance qu'a un intervalle de temps, comptée en nombre d'intervalles de temps, par rapport au début ou à la fin d'une trame.

18. Dispositif selon la revendication 17, dans lequel le dit deuxième dispositif est prévu pour sélectionner au hasard, parmi la dite quantité, un intervalle de temps parmi les intervalles de temps de la quantité qui a la plus petite distance en intervalles de temps, lorsque la dite première station mobile a demandé un intervalle de temps.

19. Dispositif selon la revendication 17, dans lequel le dit deuxième dispositif est prévu pour sélectionner au hasard, parmi la dite quantité, un ou plusieurs intervalles de temps parmi les intervalles de temps de la quantité qui ont la plus grande distance, en intervalles de temps, lorsque la dite première station mobile a demandé plus d'un intervalle de temps.

20. Dispositif selon une quelconque des revendications 13 à 17 ou 19, comprenant un quatrième dispositif prévu pour le regroupement d'intervalles de temps occupés dans une trame, ce regroupement présupposant que le nombre requis d'intervalles de temps soient libres, mais non libres consécutivement, dans la trame d'au moins une paire de fréquences, le dit quatrième dispositif comprenant :
un dispositif prévu pour la sélection d'une paire de fréquences parmi le sous-ensemble de paires de fréquences qui a le plus grand nombre d'intervalles de temps libres ;
un dispositif prévu pour la sélection d'un ou plusieurs intervalles de temps occupés qui ont la plus grande distance, comptée en nombre d'intervalles de temps, par rapport au début ou à la fin de la trame respective ; et
un dispositif prévu pour démarrer un transfert intracellule en ce qui concerne la station / les stations mobiles qui a / ont l'intervalle / les intervalles de temps occupés sélectionnés attribués, de sorte que de nouveaux intervalles de temps sont attribués à cette station / ces stations mobiles.

21. Dispositif selon une quelconque des revendications 13 à 20, incluant un cinquième dispositif prévu pour désaffecter un intervalle de temps d'une deuxième station mobile qui possède au moins deux intervalles de temps attribués, cette deuxième station mobile étant sélectionnée par le cinquième dispositif au hasard ou conformément à une liste de priorité prédéfinie.

22. Dispositif selon la revendication 21, dans lequel la dite liste de priorité est basée sur la priorité du service que la dite deuxième station mobile utilise.

23. Dispositif selon une quelconque des revendications 13 à 22, ce dispositif étant prévu pour effectuer l'attribution de deux intervalles de temps consécutifs, ou plus, lorsque la dite première station mobile demande une connexion HSCSD dans la cellule.
